# EUROPEAN PATENT SPECIFICATION

(11) **EP 3 898 103 B1**
(45) Date of publication and mention of the grant of the patent: **24.01.2024**
(21) Application number: 19831986.5
(22) Date of filing: 20.12.2019
(51) Int. Cl.: B25B 29/02

(54) **DEVICE FOR TENSIONING A CONNECTING ELEMENT**
VORRICHTUNG ZUM SPANNEN EINES VERBINDUNGSELEMENTS
DISPOSITIF PERMETTANT DE TENDRE UN ÉLÉMENT DE LIAISON

(30) Priority: 21.12.2018 GB 201820997
(43) Date of publication of application: 27.10.2021
(73) Proprietor: Caterpillar Energy Solutions GmbH, 68167 Mannheim (DE)
(72) Inventor: GUISASOLA, Inigo, 68167 Mannheim (DE)
(74) Representative: Novagraaf Group
(86) International application number: PCT/EP2019/025470
(87) International publication number: WO 2020/126093

(56) References cited:
- EP-A1- 3 069 827
- WO-A1-2010/054959
- US-A- 5 871 205

## Description

### Technical Field

The present invention refers to a device for tensioning a tensable connecting element, such as a screw connection, fastened to a component to be tightened or loosened.

### Technological Background

Tensable connecting elements, such as tensable screw connections, for tightening or connecting components are well known. Specifically, for installing such tensable connecting elements, the use of screw tensioning devices is known, for example, in the field of steel constructions and various engine design applications. These screw tensioning devices generally operate based on a torque-free tensioning method, according to which pulling forces are used to lengthen large screws or bolts in an elastic range during installation such that, upon releasing the pulling forces, the connecting elements retract and thereby apply tensional forces onto the components to be tightened.

For example, in a known use of the screw tensioning devices, at first, a first end of a screw is connected to a first component via a threaded means. Then, a second component to be fastened to the first component is provided such that a threaded rod of the screw extends therethrough. Via a second end of the screw, a nut is placed on the screw so as to be engaged with the threaded rod. Thereafter, the second end of the screw is engaged with the screw tensioning device and a pulling force is applied thereto so as to elastically lengthen the screw. In this lengthened state, the nut is further tightened such that, upon releasing the pulling force applied to the screw, the screw together with the nut apply a tensional force for frictional connecting the first to the second component.

Such a screw tensioning device, for example, is known from US 2018/0215022 A1. In the known device, hydraulically induced pulling forces are used for tensioning a screw connecting element engaged with a fixation element of the device. Specifically, the known device comprises a support element configured to support the fixation element against a component to be tightened during tensioning operation. The fixation element is arranged to be movable relative to the support element so as to apply tension or to remove tension from the screw. Further, a piston is provided which is accommodated and movable within the fixation element along a longitudinal axis of the device. For hydraulically actuating the fixation element, a hydraulic chamber containing a fluid is delimited by and provided in a space between the piston, the fixation element and the support element. In this configuration, the piston is arranged such that a movement thereof relative to the fixation element manipulates a volume of the fluid chamber and thereby transnationally actuates the fixation element relative to the support element.

By such configuration, the components of the known screw tensioning device are exerted to high hydraulic pressure. Thus, for ensuring a leak-tightness of the device, strong seals need to be provided between those components of the device which are movable relative to one another and which delimit the fluid chamber.

Due to these seals, however, relatively high forces need to be applied for moving the components relative to one another. Even in a state, in which the fluid chamber is vented, relatively high forces are required so as to move the engagement element relative to the support element of the device. Thus, it may be arduous for an operator to shift the engagement element into a reset or starting position even when the fluid chamber is vented.

Another tensioning device is known from EP3069827A1.

### Summary of the Invention

In view of the prior art, it is an objective to provide a device for tensioning a connecting element having an improved operability.

This object is solved by means of a device for tensioning a connecting element having the technical features of claim 1. Preferred embodiments are set forth in the present specification, the Figures as well as the dependent claims.

Accordingly, a device is provided for tensioning a connecting element fastened to a component to be tightened which comprises an engagement element connectable to the connecting element, and a support element configured to support the device against the component and to translationally guide the engagement element relative to the component, and a reset unit for preloading the engagement element relative to the support element, wherein the reset unit is arranged between the support element and the engagement element, and wherein the reset unit is structurally coupled to the engagement element by means of a connecting ring connected to an outer surface of the end of the engagement element by means of a threaded engagement and wherein the reset unit is configured to, in a state in which the support element supports the device against the component, preload the engagement element towards the connecting element or the component.

### Brief Description of the Drawings

The present disclosure will be more readily appreciated by reference to the following detailed description when being considered in connection with the accompanying drawings in which:
Figure 1 schematically shows a sectional view of a device for tensioning a connecting element, and
Figure 2 schematically shows an enlarged sectional view of a reset unit deployed in the device depicted in Figure 1.

### Detailed Description of Preferred Embodiments

In the following, the invention will be explained in more detail with reference to the accompanying Figures.

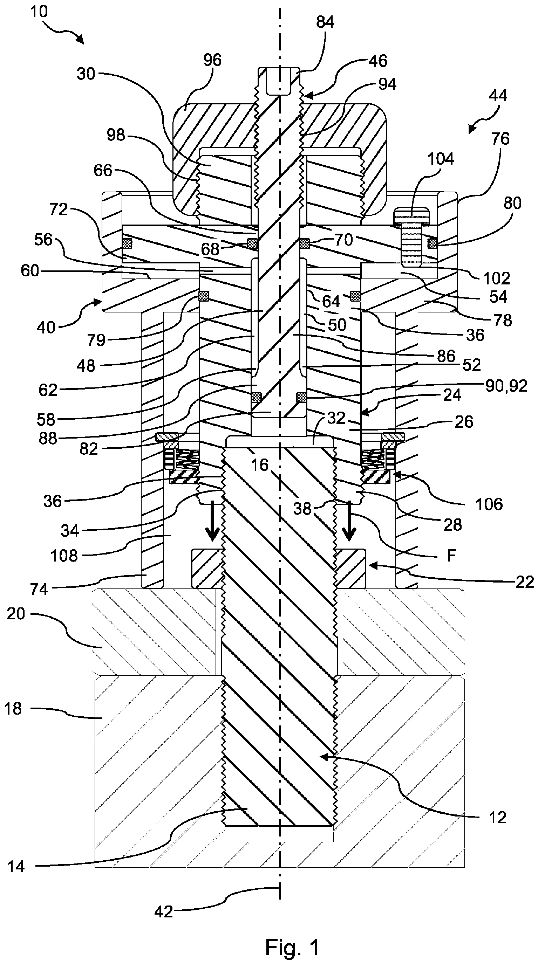

Figure 1 schematically shows a device 10 for tensioning a connecting element 12 which forms a screw connection. The shown device 10 may be used for tensioning, i.e. preloading, and/or loosening, i.e. untighten, tensable screw connections. In the context of the present disclosure, the term "tensable" refers to a material property indicating that a component, i.e. the connecting element 12, at least partially, is capable of being elastically expanded and thus of storing an amount of elastic energy when being subjected to a tensioning force.

Specifically, the connecting element 12 is provided in the form of a screw comprising a first end 14, an opposed second end 16 and an elastic part positioned between the first end 14 and the second end 16. The elastic part is capable of being elastically lengthened when the connecting element 12 is subjected to a pulling force by means of the device 10.

The connecting element 12 is configured for connecting, i.e. frictional connecting, a first component 18 to a second component 20. Specifically, the first end 14 of the connecting element 12 is configured to be connected to the first component 18 by means of a threaded engagement, as depicted in Figure 1. The elastic part of the connecting element 12 extends thought the second component 20 such that the second end 16 of the connecting element 12 is positioned on a side of the second component 20 facing away from the first component 18. For connecting the first and the second component 18, 20, a nut 22 is provided which is in threaded engagement with the elastic part of the connecting element 12.

The device 10 comprises an engagement element 24 connectable to the connecting element 12. Specifically, the engagement element 24 includes a cylindrical portion 26 having a first end 28 and a second end 30. At the first end 28, the engagement element 24 includes a cylindrical recess 32 to house the second end 16 of the connecting element 12, while the first end 14 of the connecting element 12 is connected to the first component 18 by means the threaded engagement. The recess 32 includes internal threads 34 formed on a side wall 36 of the engagement element 24 to engage with complementary threads 38 formed at the second end 16 of the connecting element 12.

Further, the device 10 comprises a support element 40 configured to support the device 10 against the second component 20 and to translationally guide the engagement element 24 relative to the first and second component 18, 20. In other words, the engagement element 24 is translationally movable relative to the support element 40, i.e. along a longitudinal axis 42 of the device. Specifically, upon translationally moving the engagement element 24 relative to the support element 40, a tensioning force may be applied to or may be removed from the connecting element 12 fixed to the engagement element 24.

The device 10 further comprises an actuating unit 44 for translating a rotational movement applied to an actuating element 46 into a translational movement of the engagement element 24 relative to the first and second component 18, 20 to be tightened and thus relative to the support element 40. In other words, the actuating unit 44 is provided so as to actuate the engagement element 24 relative to the support element 40. In the following, the structure and operation of the actuating unit 44 will be explained in more detail.

The actuating unit 44 is hydraulically actuated. In other words, a hydraulic fluid is used to transfer motive power so as to move the engagement element 24 relative to the support element 40. For doing so, the actuating unit 44 comprises a piston 48 accommodated within and movable relative to the engagement element 24, i.e. along the longitudinal axis 42. Further, a fluid chamber 50 accommodating the fluid is provided which is delimited by the piston 48, the engagement element 24 and the support element 40. In this configuration, the actuating unit 44 is designed such that a translational movement of the piston 48 manipulates a volume of the fluid chamber 50 and thereby moves the engagement element 24 with respect to the support element 40 so as to apply or remove a tension acting on the connecting element 12 connected to the engagement element 24.

More specifically, the fluid chamber 50 comprises two distinct portions, a piston portion 52 delimited by and provided between the piston 48 and the engagement element 24 and an effective portion 54 delimited by and provided between the engagement element 24 and the support element 40. The piston portion 52 and the effective portion 54 are fluid-communicatively connected via two connecting bores 56 provided in the engagement element 24. A base area 58 of the piston portion 52 is provided with an effective cross section that is smaller than an effective cross section of a base area 60 of the effective portion 54. In this context, the "effective cross section" refers to an area that is perpendicular to the longitudinal direction 42 and thus perpendicular to a moving direction of both the piston 48 and the engagement element 24 relative to the support element 40. By this configuration, an actuating force applied onto the piston 48 is hydraulically transformed into a force acting on the engagement element 24 that is higher compared to the actuating force acting on the piston 48.

For accommodating the piston 48, the engagement element 24 further includes a bore 62 extending along the longitudinal axis 42 of the device 10. Specifically, the bore 62 extends from the second end 30 of the cylindrical portion 26 to the recess 32 formed at the first end 28 of the cylindrical portion 26 of the engagement element 24 and is configured to receive the piston 48. A diameter of the bore 62 may be less than the diameter of the recess 32 which thus together form a stepped opening within the engagement element 24. Further, the bore 62 includes a variable diameter along the longitudinal axis 42. In other words, a wall of the engagement element 24 has a variable width along the length of the bore 62 such that the diameter of the bore 62 changes along the length of the bore 62. As depicted in Figure 1, the bore 62 includes a wider portion 64 and a narrower portion 66. At the wider portion 64, a distance between the piston 48 and the wall of the engagement element 24 is greater than at the narrower portion 66.

As shown in Figure 1, at the narrower portion 66, the piston 48 contacts the wall of the engagement element 24. The narrower portion 66 includes a groove 68 formed in the wall of the engagement element 24 and extending along a perimeter of the bore 62. A first sealing ring 70 is disposed in the groove 68 to form a seal joint between the piston 48 and the engagement element 24. The first sealing ring 70 is positioned between the piston 48 and the wall of the engagement element 24.

The engagement element 24 also includes a plate 72 extending radially from the cylindrical portion 26 of the engagement element 24. The plate 72 is positioned normal to the longitudinal axis 42 and is proximal to the second end 30 of the engagement element 24. The plate 72 is cylindrical in shape and forms a flange portion in proximity to the second end 30 of the engagement element 24.

The engagement element 24 is received at least partly within the support element 40. As set forth above, the engagement element 24 is arranged and adapted to be moved relative to the support element 40 to apply tension to or remove tension from the connecting element 12. The support element 40 includes a first cylindrical portion 74 and a second cylindrical portion 76 connected to one another by a connection portion 78. The first cylindrical portion 74 forms a lower part of the support element 40 to be positioned on the second component 20. The first cylindrical portion 74 surrounds a part of the connecting element 12, the first end 28 of the engagement element 24 and a portion of the cylindrical portion 26 of the engagement element 24. Specifically, the first cylindrical portion 74 surrounds the portion of the cylindrical portion 26 which is positioned underneath the plate 72 in the illustration depicted in Figure 1.

The second cylindrical portion 74 is spaced away from the first cylindrical portion 74 by the connection portion 78. The second cylindrical portion 76 surrounds the plate 72 of the engagement element 24 such that an inner surface of the second cylindrical portion 76 contacts an outer surface of the plate 72. In other words, the plate 72 is positioned within the second cylindrical portion 76 of the support element 40 and is configured to move relative to the second cylindrical portion 76.

Further, a third sealing ring 80 is positioned between the inner surface of the second cylindrical portion 74 and the outer surface of the plate 72 to prevent leakage of the fluid accommodated in the fluid chamber 50. Specifically, the third sealing ring 80 may be positioned in a groove formed either into the inner surface of the second cylindrical portion 76 or into the outer surface of the plate 72, as depicted in Figure 1

As can be gathered from Figure 1, the first cylindrical portion 74, the second cylindrical portion 76, and the connection portion 78 are hollow cylindrical portions having inner diameters different from each other, thereby forming stepped configurations with each other. The inner diameter of the connection portion 78 is smaller than the inner diameters of both the first cylindrical portion 74 and the second cylindrical portion 76. The connection portion 78 comprises an opening to guide the engagement element 24 within the support element 40, which opening has a diameter slightly larger than the diameter of the portion of the engagement element 24 guided by the support element 40. The connection portion 78 may further define a recess in which a second sealing ring 79 may be disposed for providing a sealing between the engagement element 24 and the connection portion 78.

The plate 72, the connection portion 78, and the second cylindrical portion 76 of the support element 40 together form the effective portion 54 of the fluid chamber 50. The effective portion 54 is fluidly connected to the bore 62 in the engagement element 24 via the connecting bores 56. The effective portion 54 is configured to receive the fluid from the piston portion 52 accommodated in the bore 62 of the engagement element 24 due to an axial movement of the piston 48 slidably positioned within the engagement element 24.

In this way, the fluid may move back and forth between the piston portion 52 and the effective portion 54 of the fluid chamber 50. During operation, the position of the piston 48 determines how much fluid is displaced from the piston portion 52 to the effective portion 54, and vice versa. As can be gathered from Figure 1, when the piston 48 is moved in an upward direction, i.e. in a direction facing away from the engagement element 24, the size of the piston portion 52 gets smaller. Accordingly, fluid is displaced therefrom into the effective portion 54 causing an increase of pressure in the effective portion 54 as more and more fluid enters thereinto. This pressure acts on the engagement element 24 which causes it to move in a direction facing away from the support element 40, i.e. along the longitudinal axis 42. This movement induces tensioning and thus lengthening of the connecting element 12. In this tensioned and lengthened state of the connecting element 12, an operator may tighten the nut 22 so as to position the nut 22 closer to the second component 20, i.e. to abut on the second component 20. This may be performed by reaching the nut 22 through openings in the support element 40 with a tool, an end of which may be inserted into the openings at the side of the nut 22 to turn and thus tighten or loosen the nut 22.

The piston 48 has a generally cylindrical shape with a head end 82 and a rod end 84 that are distal to one another and connected by a shaft 86. The head end 82 has a sealing portion 88 that is larger in diameter than the shaft 86. The diameter of sealing portion 88 corresponds to a diameter of the bore 62 in the engagement element 24. The sealing portion 88 comprises a recess 90 that is circular in nature. A fourth sealing ring 92 is provided within the recess 90.

The first to fourth sealing ring 70, 79, 80, 92 may be made from metal, such as iron or steel, ceramics, fibrous materials, elastomer and/or plastic.

The piston 48 further includes a threaded portion 94 that is in threaded engagement with a cap 96 of the engagement element 24. The cap 96 is firmly fixed to the second end 30 of the cylindrical portion 26 by means of a threaded connection 98. Alternatively, the cap 96 may be pressed to the second end 30 of the cylindrical portion 26 of the engagement element 24.

In the shown configuration, the actuating element 46 is formed by the rod end 84 of the piston 48. As the piston 48 and thus the actuating element 46 are connected to the cap 96 by means of a threaded engagement, the actuating unit 44 is designed such that a rotational movement of the actuating element 46 is transformed into a translational movement of the piston 48 relative to the engagement element 24 which manipulates a volume of the fluid chamber 50 and thereby moves the engagement element 24 with respect to the support element 40. As a result, upon rationally manipulating the actuation element 46, a tensioning or loosening of the connecting element 12 connected to the engagement element 24 is performed by means of the device 10.

Further, the effective portion 54 of the variable fluid chamber 50 is fluidly connected to a pressure metering device (not shown) for determining a pressure of the fluid present in the effective portion 54. A vent opening 102 is arranged in fluid connection with the effective portion 54 to remove any gases therefrom. The vent opening 102 is closed by a screw 104.

The device 10 further comprises a reset unit 106 for preloading the engagement element 24 relative to the support element 40. In other words, the reset unit 106 is configured to exert a preload force F acting on the engagement element 24. As can be gathered from Figure 1, the direction of the preload force F coincide with the longitudinal axis 42 and thus with a movement direction of the engagement element 24 relative to the support element 40. The preload force F is provided such that the engagement element 24 is shifted or pushed towards a predefined reset or starting position of the engagement element 24 relative to the support element 40. In the context of the present disclosure, the term "reset position" or "starting position" may refer to a position of the engagement element 24 relative to the support element 40, into which the engagement element 24 should be placed by an operator prior to using the device 10 for tensioning the connecting element 12, i.e. prior to connecting the engagement element 24 to the connecting element 12.

Specifically, the reset or starting position of the engagement element 24 constitutes an end position of the movement of the engagement element 24 relative to the support element 40. The term "end position" refers to a position of the engagement element 24 relative to the support element 40, beyond which the engagement element 24 is not intended and configured for being moved. In the shown configuration, the reset or starting position refers to a position of the engagement element 24, at which the engagement element 24 maximally protrudes into a cavity 108 provided in the first cylindrical portion 74 of the support element 40.

In the shown state of the device 10, in which the support element 40 supports the device 10 against the second component 20 and in which the engagement element 24 is connected to the connecting element 12, the reset unit 106 preloads the engagement element 24 relative to the support element 40 in a direction facing the connecting element 12 and thus the first and the second component 18, 20.

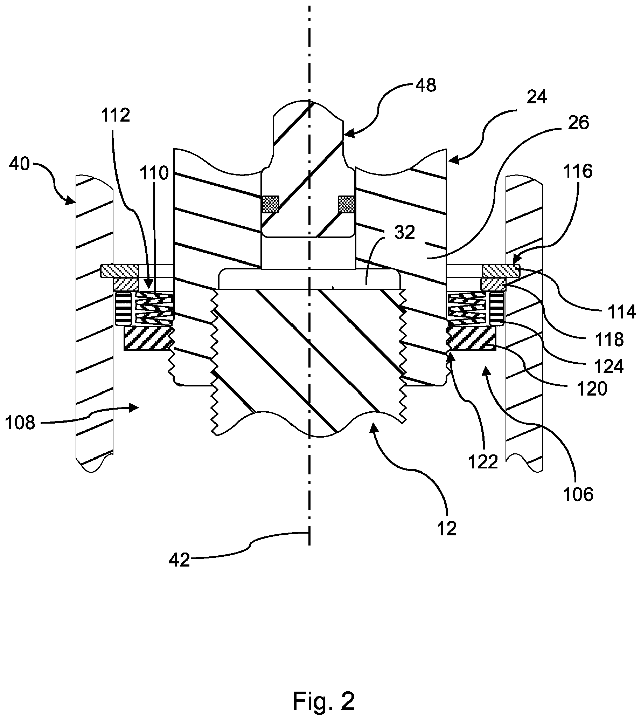

Figure 2 shows an enlarged sectional view of the reset unit 106. As can be gathered from the Figure, the reset unit 106 is arranged between the support element 40 and the engagement element 24 within the cavity 108. Further, in order to apply the preload force F for preloading the engagement element 24 relative to the support element 40, the reset unit 106 is connected to both the engagement element 24 and the support element 40 in a force transmitting manner.

Specifically, the reset unit 106 is designed to exert the preload force F onto the engagement element 24 relative to the support element 40, wherein the preload force F amounts at least 800 N. Alternatively, the preload force F may amount at least 100 N or 500 N. More specifically, in the shown configuration, the preload force F may amount about 900 N, i.e. in a state, in which the engagement element 12 is positioned in its reset or starting position, and/or in a state, in which the engagement element 24 is shifted from its reset or starting position relative to the support element, and/or in a state, in which the engagement element 24 is not connected to the connecting element 12.

As depicted in Figure 2, the reset unit 106 comprises a plurality of disc springs 110 stacked on one another in a direction parallel to the longitudinal axis 42. Accordingly, the plurality of disc springs 110 form a disc spring set 112. The disc spring set 112 is arranged circumferentially around the engagement element 24 and thus surrounds the engagement element 24 in a circumferential direction. Accordingly, a longitudinal axis of the disc spring set 112 and the disc springs 110 coincides with a longitudinal axis of the engagement element 24, i.e. the longitudinal axis 42 of the device 10.

Further, a connecting member 114 is provided for connecting the reset unit 106 to the support element 40 in a force transmitting manner. Specifically, the connecting member 114 is provided in the form of a snap-ring engaged with a groove 116 provided on an inner surface of the support element 40 which delimits the cavity 108.

To that end, a support plate 118 is provided which is interposed between the reset unit 106, i.e. the disc spring set, and the connecting member 114. Specifically, the support plate 118 is made of a hardened material, e.g. hardened steel or hardened plastic.

A further connecting member 120 is provided for connecting the reset unit 106 to the engagement element 24 in a force transmitting manner. Specifically, the further connecting element 120 is provided in the form of a connecting ring connected to an outer surface of the engagement element 24 by means of a threaded connection 122.

As depicted in Figure 2, a sleeve 124 is interposed between the reset unit 106 and the support element 40. The sleeve 124 abuts onto the inner surface of the support element 40 and the reset unit 106 abuts onto the outer surface of the engagement element 24. Alternatively, the reset unit 106 may be provided such that the sleeve 124 is interposed between the reset unit 106 and the engagement element 24, wherein the reset unit 106 may abut onto the inner surface of the support element 40 and the sleeve 124 may abut onto the outer surface of the engagement element 24.

In the configuration depicted in Figures 1 and 2, the reset unit 106 is positioned in the region of the first end 28 of the engagement element 24. This is an exemplary arrangement of the reset unit 106. It is obvious to the skilled person that the reset unit 106 may be arranged between the support element 40 and the engagement element 24 at any position within the cavity 108. Accordingly, the reset unit 106 may be provided such that the connecting member 114 and the groove 116 are arranged in the area of the connection portion 78 of the support element 40. Furthermore, the reset unit 106 may be provided with a varying number of disc springs 110 such that a length of the reset unit 106 along the longitudinal axis 42 may vary accordingly.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen within the scope of the invention as defined in the claims.

This is in particular the case with respect to the following optional features which may be combined with some or all embodiments, items and/or features mentioned before in any technically feasible combination.

A device may be provided for tensioning a connecting element fastened to a component to be tightened. The device may comprise an engagement element connectable to the connecting element, and a support element configured to support the device against the component and to translationally guide the engagement element relative to the component. Further, the device may be provided such that the engagement element is preloaded relative to the support element, in particular in a state, in which the engagement element is not connected to the connecting element.

In other words, by being preloaded, the engagement element is exerted to a preload force which may cause the engagement element to be shifted or pushed towards a predefined reset position, e.g. a starting position thereof. In this way, the preload force may support an operator in setting the device into its reset or starting condition prior to use the device for tensioning a connecting element, i.e. prior to connect the engagement element to the connecting element to be tightened, thereby increasing the operability of the device for a user. For example, the device may be provided such that, when a user sets the device into a reset or starting state, particularly by shifting the engagement element into its reset or starting position, the preload force may counteract frictional forces generated by seals arranged between the movable components of the device. Accordingly, the exertion of an operator when adjusting the device may be considerably reduced, thereby improving the device's operability for an operator.

Further, the thus exerted preload force acting on the engagement element may ensure that the components of the device, i.e. the engagement element, are properly positioned into its predefined positions, i.e. its reset or starting positions, in a self-acting way. In this way, the operational safety of the device may be increased.

Generally, the proposed device may be used, for example, in the field of steel constructions and various engine design applications, but is not limited to these applications. Rather, the proposed device may be used in any application in which connecting elements are tightened by employing torque-free tensioning methods. In one example, the proposed device may be used to fasten a turbo charger to an engine crank case.

Specifically, the device may be used for tensioning and/or loosening a connecting element. In other words, the device may be used to preload and/or untighten a connecting element. The connecting element may be a tensable connecting element. For example, the connecting element may be or comprise a screw, a bolt and/or any other type of tensable connecting elements.

Further, the connecting element to be tensioned and/or loosened by the proposed device may be intended and/or configured to tighten a component to which it is fastened. Alternatively or additionally, the connecting element to be tensioned and/or loosened by the proposed device may be intended and/or configured for connecting, i.e. frictional connecting, a first component to a second component. Accordingly, the device may be configured for tensioning a connecting element for connecting, i.e. frictional connecting, a first component to a second component. For doing so, a first end of the connecting element may be fixed to the first component, i.e. by means of a threaded engagement. For example, the first component may be an engine crank case and the second element may be a turbo charger mount.

As set forth above, the device may comprise the engagement element connectable to the connecting element. In other words, the engagement element is configured for being connected to the connecting element, i.e. in a force- and/or form-fitting manner. For doing so, the engagement element may comprise an engagement section for engaging with the connecting element. Specifically, the engagement section may be engaged with the connecting element by means of a threaded engagement. The engagement section may be provided at an end portion of the engagement element. Further, the engagement section may be configured to engage with a second end of the connecting element arranged opposed to the first end thereof. For example, the engagement section may be provided with a thread designed complementary to a thread formed at the second end of the connecting element.

The device may further comprise the support element configured to support the engagement element against the component to be tightened during tensioning operation of the device. In other words, the support element is configured to, during the tensioning operation of the device, abut on the component to be tightened, i.e. on the first or the second component. In this way, the support element is capable of generating a force, i.e. a reaction force, counteracting the pulling force exerted onto the connecting element connected to the engagement element during tension operation of the device.

As set forth above, the support element may be designed to translationally guide the engagement element. In other words, the engagement element is translationally movable relative to the support element, i.e. along a longitudinal axis of the device, and thus relative to the component to be tightened.

Upon translationally moving the engagement element relative to the support element, a tensioning force may be applied to or may be removed from the connecting element fixed to the engagement element. Thus, the device may be provided such that the engagement element is translationally movable relative to the support element so as to apply a tension to or to remove a tension from the connecting element.

The device may be provided such that the engagement element, at least partly, is accommodated within the support element. For example, the support element may be provided with a cavity, i.e. a cylindrical cavity which particularly extends along the longitudinal axis of the device. The cavity may be configured to at least partially receive the engagement element, i.e. the engagement section thereof.

The device may further comprise an actuating unit for actuating the engagement element. Specifically, the actuating unit may be configured for translationally moving the engagement element relative to the support element and thus relative to the component to be tightened.

The actuating unit may be a hydraulically actuated or a hydraulically driven actuating unit. This means that the actuating unit may use a fluid for actuating the engagement element. In other words, a fluid is used to transfer motive power for the engagement element so as to move the engagement element relative to the component to be tightened and thus relative to the support element. For doing so, the actuating unit may comprise a fluid chamber containing a hydraulic fluid and an actuating means, e.g. a pump or a piston, for applying pressure to and/or releasing pressure from the fluid accommodated in the fluid chamber.

For example, the actuating unit may be provided with an actuating element configured for translating a rotational movement applied to the actuating element into a translational movement of the engagement element relative to the component to be tightened and thus relative to the support element.

Specifically, the actuating unit may comprise a piston accommodated within and movable relative to the engagement element, i.e. along the device's longitudinal axis. Further, the fluid chamber accommodating the fluid may be defined or delimited at least partly by the piston and/or the engagement element and/or the support element. Specifically, the fluid chamber may at least partly be provided in a space between the piston and/or the engagement element and/or the support element. In this configuration, the actuating unit may be provided such that a translational movement of the piston manipulates a volume of the fluid chamber and thereby moves the engagement element with respect to the support element and thus with respect to the component to be tightened.

More specifically, the fluid chamber may comprise two distinct portions, namely a piston portion delimited by and provided between the piston and the engagement element and an effective portion delimited by and provided between the engagement element and the support element which are fluid-communicatively connected, i.e. via bores provided in the engagement element. An effective base area of the piston portion may be smaller than an effective base area of the effective portion which may be perpendicular to a movement direction of both the piston and the engagement element, i.e. perpendicular to the device's longitudinal axis. By such an arrangement, the actuating force applied onto the piston may be hydraulically transformed into a force acting on the engagement element which is higher compared to that one acting on the piston. In this way, the actuating unit transforms an actuating force into a pulling force acting on the connecting element which is multiplied compared to the actuating force the piston is exerted to.

Further, in the actuating unit, the actuating element and the piston may be arranged and interlinked to one another such that a rotational movement of the actuating element causes a translational movement of the piston, i.e. along the device's longitudinal axis, which manipulates the volume of the fluid chamber and thereby moves the engagement element relative to the component. One example of interlinking the actuating element and the piston is given by Figure 1 and its accompanying description.

In the following, the configuration of the device in view of the preload of the engagement element relative to the support element is specified.

Specifically, the device may be provided such that the engagement element is preloaded towards a reset position. In other words, the preload force acting on the engagement element may push the engagement element in direction of its reset position. The reset position may constitute a starting position the engagement element should be positioned in prior to being connected to the connecting element.

The direction of the preload force acting upon the engagement element may coincide with a movement direction of the engagement element relative to the support element, i.e. for shifting the engagement element into its reset or starting position. Accordingly, when the device is provided such that the engagement element is movable relative to the support element along the longitudinal axis, the preload force may act upon the engagement element in a direction parallel to the longitudinal axis of the device.

Further, the reset or starting position of the engagement element may constitute an end position of the movement of the engagement element relative to the support element. Specifically, the device may be designed such that the engagement element is translationally movable relative to the support element between a first end position and a second end position. This means that the engagement element is not intended and configured for being moved beyond these end positions.

According to the invention, the engagement element is preloaded towards the connecting element and/or the component to be tightened. Thus, the preload force acting upon the engagement element may point in a direction towards the connecting element and/or the component to be tightened. In other words, in a state, in which the support element supports the device against the component to be tightened and/or in which the engagement element is connected to the connecting element, the engagement element is preloaded towards, i.e. in direction of, the component to be tightened and/or the connecting element.

For applying the preload force onto the engagement element, the device comprises a reset unit for preloading the engagement element relative to the support element. The reset unit is structurally coupled to both the engagement element and the support element. The reset unit is arranged between the engagement element and the support element. In this way, a compact design of the device may be ensured. Specifically, the reset unit may be arranged in the cavity provided in the support element in which the engagement element is at least partially accommodated. Thus, the cavity of the support element may accommodate both the engagement element and the reset unit. The reset unit may be arranged within the cavity of the support element such that it is interposed between the support element and the engagement element.

The reset unit may be designed to apply the preload force onto the engagement element relative to the support element. The preload force may amount at least 100 N or at least 500 N or at least 800 N, i.e. in a state, in which the engagement element is positioned in its reset or starting position relative to the support element, and/or in a state, in which the engagement element is shifted from its reset or starting position relative to the support element. For example, the reset device may be configured to apply a preload force of about 900 N onto the engagement element, i.e. in the state, in which the engagement element is positioned in its reset or starting position, and/or in a state, in which the engagement element is shifted from its reset or starting position relative to the support element.

The reset unit may comprise at least one spring element, i.e. in the form of a compression spring, for exerting the preload force. For example, the at least one spring element may be a threaded compression spring.

In a further development, the at least one spring element may be a disc spring. It has been found that, i.e. compared to the use of threaded compression springs, the use of disc springs in the reset unit may provide advantageous effects. As to substance, compared to threaded compression springs, disc springs usually comprise a higher stiffness and thus a higher force/displacement ratio. This mechanical characteristic of disc springs may enable that the reset unit can be assembled and disassembled in a more convenient and safer way for an assembly operator.

The reset unit may comprise one disc spring or more than one disc spring. Further, the reset unit may comprise at least one disc spring set, each of which may have a plurality of disc springs which particularly may be stacked on one another.

Further, the reset unit may be provided such that it at least partially surrounds or encloses the engagement element. For example, the reset unit may be provided so as to enclose the engagement element in a circumferential direction thereof, wherein the circumferential direction may be perpendicular to the longitudinal axis of the device.

As set forth above, the reset unit may be structurally coupled to the support element in a force transmitting manner. This may be realized by means of a connecting member structurally interlinked to both the reset unit and the support element in a force transmitting manner. In particular, the connecting member may be connected to the support element in a form-and/or force-looking manner. Specifically, for providing a form-looking connection between the connecting member and the support element, the connecting member may be provided in the form of a tongue or a snap-ring which is complementary designed to and engaged with a groove provided in the support element. More specifically, the connecting member may be connected to the support element on an inner surface thereof which particularly delimits the cavity accommodating, at least partially, the engagement element and/or the reset unit.

In the further development, for providing a load-compliant design, a support part, particularly a support plate, may be interposed between the reset unit and the connecting member. In this way, an even force distribution onto the connecting member may be ensured. Specifically, the support part, i.e. the support plate, may be made of a hardened material, particularly of hardened steel or hardened plastic.

Further, as set forth above, the reset unit is structurally coupled to the engagement element in a force transmitting manner. For doing so, a further connecting member may be provided. The further connecting member may be structurally interlinked to both the reset unit and the engagement element in a force transmitting manner. In particular, the further connecting member may be connected to the engagement element, i.e. an outer surface thereof, in a form- and/or force-looking manner. Specifically, the further connecting member may be provided in the form of a connecting ring connected to the engagement element, i.e. an outer surface thereof, by means of a threaded engagement.

As set forth above, the reset device may be interposed between the support element and engagement element. In a further development, in addition, a sleeve may be interposed between the reset device and the support element and/or between the reset device and the engagement element. By such configuration, the sleeve may ensure that the reset unit is properly positioned relative to the engagement element and the support element. Specifically, when the sleeve is interposed between the reset unit and the support element, it may abut onto an inner surface of the support element. In this configuration, the reset unit may abut onto an outer surface of the engagement element. When the sleeve is interposed between the reset unit and engagement element, it may abut onto an outer surface of the engagement element. In this configuration, the reset unit may abut onto an inner surface of the support element.

### Industrial Applicability

The proposed device 10 may be used for fastening and/or loosening a tensable connecting element 12 to components to be tightened. The device 10 may be used in different fields of application, such as in steel constructions or engine design applications. In the following, the use of the device 10 for tightening and loosening a screw connection is described in more detail.

To connect a first component 18, e.g. a crank case, to a second component 20, e.g. a turbo charger mount, using a device 10 as shown in Figure 1, the second component 20 is positioned next to the first component 18 and a connecting element 12 in the form of a screw is guided through a hole in the second component 20 and connected to the first component 18 by means of a threaded connection. As a result, the connecting element 12 extends from a side of the second component 20 which faces away from the first component 18. A nut 22 is screwed on the connecting element 12 from a first end 14 of the connecting element 12 which is arrange opposite to a second end 16 of the connecting element 12 positioned in and fastened to the first component 18.

Then, the device 10 is positioned over the connecting element 12 such that the connecting element 12 is housed by the support element 40. The support element 40 is placed on the second component 20. The engagement element 24 is positioned to introduce the connecting element 12 into the recess 32 to establish a threaded connection between the engagement element 24 and the first end 14 of the connecting element 12.

To apply a tension force to the connecting element 12, the actuating element 46 is rotationally actuated by using an electric or manual screwdriver. In this way, the piston 48 is transnationally actuated relative to the engagement element 24 in a direction facing away from the second component 20. By moving the piston 48 in this direction, i.e. upwards, the piston portion 52 of the fluid chamber 50 decreases and hydraulic fluid is pushed therefrom into the effective portion 54 of the fluid chamber 50 via the connecting bores 56. As a result, the effective portion 54 increases in volume thereby exerting a pressure on the engagement element 24 which moves the same along the longitudinal axis 42 of the device 10 in respect to the support element 40. Accordingly, a distance between the engagement element 24 and the first and the second component 18, 20 increases, thereby tensioning and thus lengthening the connecting element 12.

In this tensioned condition of connecting element 12, for retaining the tension on the connecting element 12, the nut 22 is further tightened on the connecting element until the nut 22 abuts on the second component 20. This is performed by reaching through openings in the support element 40 with a tool, like a stick which end may be inserted in openings at the side of the nut 22 to turn the nut 22 on the connecting element 12 from the side.

For loosening a screw connection formed by the connecting element 12 and the nut 22, which was fastened by device 10 as described above, the support element 40 is positioned around the connecting element 12 on the second component 20. The exposed first end 14 of the connecting element 12 is fixed to the engagement element 24 by introducing the first end 14 of the connecting element in the recess 32 of the engagement element and connecting the first end 14 of the connecting element 12 with the engagement element 24 by a threaded engagement by means of complementary threads formed at the recess 32 of the engagement element 24 and the first end 14 of the connecting element 12.

To apply a tension force to the connecting element 12, the actuating element 46 is rotationally actuated by using an electric or manual screwdriver. As a result, the piston 48 is transnationally actuated relative to the engagement element 24 in a direction facing away from the second component 20. By moving the piston 48 in this direction, i.e. upwards, the piston portion 52 of the fluid chamber 50 decreases and hydraulic fluid is pushed therefrom into the effective portion 54 of the fluid chamber 50 via the connecting bores 56. As a result, the effective portion 54 increases in volume thereby exerting a pressure on the engagement element 24 which moves the same along the longitudinal axis 42 of the device 10 in respect to the support element 40. Accordingly, a distance between the engagement element 24 and the first and the second component 18, 20 increases, thereby tensioning and thus lengthening the connecting element 12.

In a further step, the nut 22 positioned on the connecting element 12 is loosened using a tool reaching through an opening in the support element 40. After loosening the nut 22, the tension force applied to the connection element 12 is removed by rotationally actuating the actuating element 46 in a direction that is reversed compared to the rotational actuation of the same for generating the tension force as described above. As a result, the piston 48 is moved towards the second component 20, thereby increasing the piston portion 52 of the fluid chamber 50. Further, the effective portion 54 of the fluid chamber 50 decreases and the engagement element 24 moves towards the second component 20 and release the tension acting on the connecting element 12. Thereafter, the connecting element 12 is released from the engagement element 24, thereby removing the device 10 from the connecting element 12 and the first and second component 18, 20.

## Claims

1. Device (10) for tensioning a connecting element (12) fastened to a component (18, 20) to be tightened, comprising an engagement element (24) connectable to the connecting element (12), and a support element (40) configured to support the device (10) against the component (20) and to translationally guide the engagement element (24) relative to the component (18, 20),
and a reset unit (106) for preloading the engagement element (24) relative to the support element (40), wherein the reset unit (106) is arranged between the support element (40) and the engagement element (24), and wherein the reset unit (106) is structurally coupled to the engagement element (24) by means of a connecting ring (120) connected to an outer surface of the end (28) of the engagement element (24) by means of a threaded engagement and wherein the reset unit (106) is configured to, in a state in which the support element (40) supports the device (10) against the component (18, 20), preload the engagement element (24) towards the connecting element (12) or the component (18, 20).

2. Device according to claim 1, wherein the engagement element (24) is preloaded towards a reset position thereof.

3. Device according to claim 2, wherein the reset position constitutes an end position of a movement of the engagement element (24) relative to the support element (40).

4. Device according to any one of claims 1 to 3, wherein the reset unit (106) is designed to apply a preload force (F) of at least 100 N onto the engagement element 24.

5. Device according to any one of claims 1 to 4, wherein the reset unit (106) comprises at least one disc spring (110) or at least one disc spring set (112), wherein in particular the disc spring set (112) comprises a plurality of stacked disc springs (110).

6. Device according to any one of claims 1 to 5, wherein the reset unit (106) is designed and arranged such that it at least partially surrounds the engagement element (24).

7. Device according to any one of claims 1 to 6, wherein the reset unit (106) is structurally coupled to the support element (40) by means of a connecting member (114), in particular a tongue or snap-ring, engaged with a groove (116) provided in the support element (40).

8. Device according to claim 7, wherein the connecting member (114) is provided on in inner surface of the support element (40) delimiting a cavity (108), within which the engagement element (24) is at least partially accommodated.

9. Device according to claim 6 or 7, wherein a support part, particularly a support plate (118), is interposed between the reset unit (106) and the connecting member (114), wherein in particular, the support part is made of a hardened material, particularly hardened steel or hardened plastic.

10. Device according to any one of claims 1 to 9, wherein a sleeve (124) is interposed between the reset unit (106) and the support element (40), and wherein in particular the sleeve (124) abuts onto an inner surface of the support element (40) and/or the reset unit (106) abuts onto an outer surface of the engagement element (24).

11. Device according to any one of claims 1 to 10, wherein a sleeve is interposed between the reset unit (106) and the engagement element (24), and wherein in particular the reset unit (106) abuts onto an inner surface of the support element (40) and/or the sleeve () abuts onto an outer surface of the engagement element (24).

## Patentansprüche

1. Vorrichtung (10) zum Spannen eines Verbindungselements (12), das an einer festzuziehenden Komponente (18, 20) befestigt ist, umfassend ein Eingriffselement (24), das mit dem Verbindungselement (12) verbindbar ist, und ein Stützelement (40), das konfiguriert ist, um die Vorrichtung (10) gegen die Komponente (20) zu stützen und um das Eingriffselement (24) bezüglich der Komponente (18, 20) translatorisch zu führen,
und eine Rückstelleinheit (106) zum Vorspannen des Eingriffselements (24) bezüglich des Stützelements (40), wobei die Rückstelleinheit (106) zwischen dem Stützelement (40) und dem Eingriffselement (24) angeordnet ist und wobei die Rückstelleinheit (106) mittels eines Verbindungsrings (120), der mit einer Außenoberfläche des Endes (28) des Eingriffselements (24) mittels eines Gewindeeingriffs verbunden ist, mit dem Eingriffselement (24) strukturell gekoppelt ist und wobei die Rückstelleinheit (106) konfiguriert ist, um, in einem Zustand, in dem das Stützelement (40) die Vorrichtung (10) gegen die Komponente (18, 20) stützt, das Eingriffselement (24) in Richtung des Verbindungselements (12) oder der Komponente (18, 20) vorzuspannen.

2. Vorrichtung nach Anspruch 1, wobei das Eingriffselement (24) in Richtung einer Rückstellposition davon vorgespannt ist.

3. Vorrichtung nach Anspruch 2, wobei die Rückstellposition eine Endposition einer Bewegung des Eingriffselements (24) bezüglich des Stützelements (40) ausbildet.

4. Vorrichtung nach einem der Ansprüche 1 bis 3, wobei die Rückstelleinheit (106) ausgelegt ist, um eine Vorspannkraft (F) von mindestens 100 N auf das Eingriffselement 24 anzuwenden.

5. Vorrichtung nach einem der Ansprüche 1 bis 4, wobei die Rückstelleinheit (106) mindestens eine Tellerfeder (110) oder mindestens einen Tellerfedersatz (112) umfasst, wobei insbesondere der Tellerfedersatz (112) eine Vielzahl von gestapelten Tellerfedern (110) umfasst.

6. Vorrichtung nach einem der Ansprüche 1 bis 5, wobei die Rückstelleinheit (106) derart ausgelegt und angeordnet ist, dass sie das Eingriffselement (24) mindestens teilweise umgibt.

7. Vorrichtung nach einem der Ansprüche 1 bis 6, wobei die Rückstelleinheit (106) mit dem Stützelement (40) mittels eines Verbindungsglieds (114) strukturell gekoppelt ist, insbesondere eines Zungen- oder Sprengrings, das mit einer Nut (116), die in dem Stützelement (40) bereitgestellt ist, in Eingriff steht.

8. Vorrichtung nach Anspruch 7, wobei das Verbindungsglied (114) an in innerer Oberfläche des Stützelements (40) bereitgestellt ist, das einen Hohlraum (108), innerhalb dem das Eingriffselement (24) mindestens teilweise aufgenommen ist, begrenzt.

9. Vorrichtung nach Anspruch 6 oder 7, wobei ein Stützteil, besonders eine Stützplatte (118), zwischen der Rückstelleinheit (106) und dem Verbindungsglied (114) eingeschoben ist, wobei insbesondere das Stützteil aus einem gehärteten Material, besonders gehärtetem Stahl oder gehärtetem Kunststoff, hergestellt ist.

10. Vorrichtung nach einem der Ansprüche 1 bis 9, wobei eine Hülse (124) zwischen der Rückstelleinheit (106) und dem Stützelement (40) eingeschoben ist und wobei insbesondere die Hülse (124) an einer Innenoberfläche des Stützelements (40) anliegt und/oder die Rückstelleinheit (106) an einer Außenoberfläche des Eingriffselements (24) anliegt.

11. Vorrichtung nach einem der Ansprüche 1 bis 10, wobei eine Hülse zwischen der Rückstelleinheit (106) und dem Eingriffselement (24) eingeschoben ist und wobei insbesondere die Rückstelleinheit (106) an einer Innenoberfläche des Stützelements (40) anliegt und/oder die Hülse () an einer Außenoberfläche des Eingriffselements (24) anliegt.

## Revendications

1. Dispositif (10) permettant de tendre un élément de liaison (12) fixé à un composant (18, 20) à serrer, comprenant un élément de mise en prise (24) pouvant être relié à l'élément de liaison (12), et un élément de support (40) conçu pour supporter le dispositif (10) contre le composant (20) et pour guider en translation l'élément de mise en prise (24) par rapport au composant (18, 20),
et une unité de réinitialisation (106) pour précharger l'élément de mise en prise (24) par rapport à l'élément de support (40), dans lequel l'unité de réinitialisation (106) est agencée entre l'élément de support (40) et l'élément de mise en prise (24), et dans lequel l'unité de réinitialisation (106) est accouplée structurellement à l'élément de mise en prise (24) au moyen d'une bague de liaison (120) reliée à une surface externe de l'extrémité (28) de l'élément de mise en prise (24) au moyen d'une mise en prise filetée et dans lequel l'unité de réinitialisation (106) est conçue pour, dans un état dans lequel l'élément de support (40) supporte le dispositif (10) contre le composant (18, 20), précharger l'élément de mise en prise (24) vers l'élément de liaison (12) ou le composant (18, 20).

2. Dispositif selon la revendication 1, dans lequel l'élément de mise en prise (24) est préchargé vers une position de réinitialisation de celui-ci.

3. Dispositif selon la revendication 2, dans lequel la position de réinitialisation constitue une position d'extrémité d'un mouvement de l'élément de mise en prise (24) par rapport à l'élément de support (40).

4. Dispositif selon l'une quelconque des revendications 1 à 3, dans lequel l'unité de réinitialisation (106) est conçue pour appliquer une force de précharge (F) d'au moins 100 N sur l'élément de mise en prise 24.

5. Dispositif selon l'une quelconque des revendications 1 à 4, dans lequel l'unité de réinitialisation (106) comprend au moins un ressort à disque (110) ou au moins un ensemble ressort à disque (112), dans lequel, en particulier, l'ensemble ressort à disque (112) comprend une pluralité de ressorts à disque (110) empilés.

6. Dispositif selon l'une quelconque des revendications 1 à 5, dans lequel l'unité de réinitialisation (106) est conçue et agencée de telle sorte qu'elle entoure au moins partiellement l'élément de mise en prise (24).

7. Dispositif selon l'une quelconque des revendications 1 à 6, dans lequel l'unité de réinitialisation (106) est accouplée structurellement à l'élément de support (40) au moyen d'un élément de liaison (114), en particulier une languette ou un jonc, en prise avec une rainure (116) prévue dans l'élément de support (40).

8. Dispositif selon la revendication 7, dans lequel l'élément de liaison (114) est prévu sur la surface interne de l'élément de support (40) délimitant une cavité (108), à l'intérieur de laquelle l'élément de mise en prise (24) est au moins partiellement logé.

9. Dispositif selon la revendication 6 ou 7, dans lequel une pièce de support, en particulier une plaque de support (118), est interposée entre l'unité de réinitialisation (106) et l'élément de liaison (114), dans lequel, en particulier, la pièce de support est réalisée en un matériau durci, en particulier en acier trempé ou en plastique durci.

10. Dispositif selon l'une quelconque des revendications 1 à 9, dans lequel un manchon (124) est interposé entre l'unité de réinitialisation (106) et l'élément de support (40), et dans lequel, en particulier, le manchon (124) vient en butée sur une surface interne de l'élément de support (40) et/ou l'unité de réinitialisation (106) vient en butée sur une surface externe de l'élément de mise en prise (24).

11. Dispositif selon l'une quelconque des revendications 1 à 10, dans lequel un manchon est interposé entre l'unité de réinitialisation (106) et l'élément de mise en prise (24), et dans lequel, en particulier, l'unité de réinitialisation (106) vient en butée sur une surface interne de l'élément de support (40) et/ou le manchon () vient en butée sur une surface externe de l'élément de mise en prise (24).
